# FASCICULE DE BREVET EUROPEEN

(11) **EP 2 652 850 B1**
(45) Date de publication et mention de la délivrance du brevet: **15.04.2015**
(21) Numéro de dépôt: 11794203.7
(22) Date de dépôt: 14.11.2011
(51) Int. Cl.: H02B 1/36, H04L 12/40

(54) **DISPOSITIF DE COMMUNICATION ET TABLEAU ELECTRIQUE COMPORTANT UN TEL DISPOSITIF**
KOMMUNIKATIONSVORRICHTUNG UND ELEKTRISCHES SCHALTFELD MIT EINER SOLCHEN VORRICHTUNG
COMMUNICATION DEVICE AND ELECTRIC BOARD COMPRISING SUCH A DEVICE

(30) Priorité: 16.12.2010 FR 1004912
(43) Date de publication de la demande: 23.10.2013
(73) Titulaire: Schneider Electric Industries SAS, 92500 Rueil-Malmaison (FR)
(72) Inventeur: BARSTZ, Daniel, 38000 Grenoble (FR); CONTINI, Erick, 38240 Meylan (FR)
(74) Mandataire: Tripodi, Paul
(86) Numéro de dépôt international: PCT/FR2011/000604
(87) Numéro de publication internationale: WO 2012/080587

(56) Documents cités:
- WO-A1-2009/014581
- US-A1- 2006 293 190

## Description

### DOMAINE TECHNIQUE

La présente invention concerne un dispositif de communication pour un tableau électrique, particulièrement adapté aux dispositifs électriques communicants à une fréquence de transmission élevée de type Ethernet. Elle concerne aussi un tableau électrique en tant que tel comprenant un tel dispositif de communication. Enfin, elle concerne un tiroir d'un tel tableau électrique.

### ETAT DE LA TECHNIQUE

Il est connu de disposer différents dispositifs électriques dans des tiroirs d'un tableau électrique, de sorte de pouvoir faciliter les opérations de maintenance en intervenant simplement sur chacun de ces dispositifs électriques du tableau électrique par la simple ouverture d'un tiroir. Lors de cette ouverture d'un tiroir, la liaison électrique du dispositif électrique est automatiquement coupée, par l'intermédiaire d'une liaison dite débrochable agencée entre le tiroir et le tableau électrique. Un opérateur peut ainsi intervenir sur le dispositif électrique compris dans le tiroir débroché en toute sécurité, alors que les autres dispositifs électriques du tableau électrique continuent de fonctionner normalement.

Toutefois, les différents dispositifs électriques ou électroniques d'un système sont aujourd'hui souvent communicants, et reliés entre eux par des moyens de communication à des fréquences élevées de type Ethernet. Une solution courante pour leur permettre une telle communication consiste à les relier par une liaison en chaîne ou guirlande, aussi appelée par sa dénomination anglo-saxonne de « daisy chain », dans laquelle chaque dispositif électrique ou électronique est uniquement et directement relié à deux dispositifs amont et aval. Cette liaison en guirlande peut aussi être fermée. On parle alors d'une guirlande bouclée (en anglais «daisy chain loop »). La particularité d'une telle chaîne de communication provient du fait que les données de communication transitent sur toute la chaîne, au travers tous les dispositifs électriques du système. Dans le cas d'une guirlande simple, si un seul de ces dispositifs électriques ou électroniques est défaillant, ou sa liaison avec la chaîne de communication rompue, alors l'ensemble de la chaîne de communication en aval s'arrête de fonctionner et aucun des dispositifs électriques ou électroniques se trouvant en aval ne peut plus recevoir ni transmettre des données de communication. Dans le cas d'une guirlande bouclée les dispositifs se trouvant en aval pourront continuer à communiquer. Or, si un deuxième dispositif s'arrête de fonctionner, tous les dispositifs se trouvant entre les deux dispositifs arrêtés s'arrêteront de communiquer.

Pour pallier un tel inconvénient, le document WO2007/016253 décrit une solution dans laquelle un commutateur de dérivation est associé à chaque dispositif électrique ou électronique pour créer une voie de dérivation nommée aussi "by-pass" afin de contourner un dispositif électrique ou électroniques lorsqu'il est défaillant ou volontairement retiré et permettre aux autres dispositifs électriques ou électroniques de rester en communication en maintenant la chaîne de communication fermée en écartant le dispositif électrique ou électronique défaillant ou retiré. Toutefois, cette solution ne s'intéresse pas aux dispositifs électriques disposés dans un tableau électrique et ne permet pas les opérations de maintenance avantageuses offertes par une telle architecture dans un tableau électrique. Un autre dispositif de dérivation est décrit dans le document WO2009/014581.

### EXPOSE DE L'INVENTION

Ainsi, l'invention a pour objet de proposer une solution d'architecture d'un système comprenant plusieurs dispositifs électriques communicants qui permet leur entretien convivial et facile et qui ne présente pas tout ou partie des inconvénients de l'état de la technique.

Un dispositif de communication pour un tableau électrique selon l'invention comprend au moins un interrupteur commandant un dispositif de commutation pour dériver une chaîne de communication haute fréquence ou haut débit, l'interrupteur étant apte à coopérer avec un tiroir débrochable d'un tableau électrique pour commander le dispositif de commutation en fonction de la position du tiroir.

Avantageusement, l'interrupteur est un micro-interrupteur de petite taille.

De préférence, l'interrupteur commande au moins un relais électromécanique ou électronique dont les contacts permettent de commuter les fils de la chaîne de communication.

De préférence, la chaîne de communication transmet des données à un débit allant jusqu'à 100 Mbits/s.

Dans un mode de réalisation préférentiel, le dispositif comprend des contacts glissants au niveau des fils de la chaîne de communication pour permettre de maintenir le contact avec la chaîne de communication dans une position intermédiaire de test d'un tiroir du tableau électrique.

Dans un mode de réalisation particulier, le dispositif comprend au moins un brin de masse disposé entre deux brins de communication de la chaîne de communication au niveau des contacts glissants pour réduire la diaphonie aux fréquences élevées de transmission de données.

Un tableau électrique selon l'invention comprenant au moins un tiroir débrochable formant un logement pour le positionnement d'un dispositif électrique comprend un dispositif de communication à haute fréquence de type Ethernet tel que défini ci-dessus formant une chaîne de communication en guirlande, en ce que le au moins un tiroir comprend un connecteur débrochable pour le relier ou non à la chaîne de communication, en ce que le au moins un tiroir peut occuper une première position embrochée dans laquelle il est relié à la chaîne de communication, et en ce qu'il comprend un interrupteur solidaire du tableau électrique commandant un commutateur de dérivation de sorte de former une dérivation sur la chaîne de communication lorsque le tiroir occupe une seconde position débrochée.

Avantageusement, l'interrupteur est disposé sur le châssis en vis-à-vis avec une face latérale du tiroir, et en ce que ce dernier comprend un élément de coopération coopérant avec l'interrupteur.

De préférence, l'interrupteur est en position fermée lorsque le tiroir occupe une première position de fonctionnement normal dans laquelle son élément de coopération coopère avec l'interrupteur et en ce que l'interrupteur est en position ouverte lorsque le tiroir occupe une seconde position ouverte dans laquelle son élément de coopération ne coopère plus avec l'interrupteur.

Dans un mode de réalisation particulier, le tableau comprend une liaison glissante au niveau d'une face latérale du tiroir débrochable, par laquelle transite la chaîne de communication, de sorte de lier le tiroir à la chaîne de communication dans la première position de fonctionnement normal du tiroir et dans une seconde position intermédiaire de test dans laquelle le tiroir est légèrement ouvert, et de déconnecter le tiroir de la chaîne de communication dans une position débrochée du tiroir, l'interrupteur étant disposé relativement au tiroir de sorte de commander la dérivation de la chaîne de communication quasi simultanément à la déconnexion de la liaison glissante, dans un délai inférieur ou égal à

Avantageusement, le tableau comprend une connexion de puissance débrochable disposée au niveau du fond du tiroir.

Un tiroir selon l'invention d'un tableau électrique tel que défini ci-dessus comprend un connecteur de communication débrochable pour une liaison avec une chaîne de communication à haute fréquence de type Ethernet et un élément de coopération apte à une coopération avec un interrupteur de commande d'un dispositif de commutation de la chaîne de communication.

### BREVE DESCRIPTION DES DESSINS

Ces objets, caractéristiques et avantages de la présente invention seront exposés en détail dans la description suivante d'un mode d'exécution particulier fait à titre non-limitatif en relation avec les figures jointes parmi lesquelles :
Les figures 1 a à 1 c représentent schématiquement trois étapes lors de la mise en oeuvre du concept de l'invention.
Les figures 2a à 2c représentent trois positions différentes d'un tiroir d'un tableau électrique selon un mode d'exécution de l'invention.
La figure 3 représente le dispositif de commutation associé à un tiroir du tableau électrique selon le mode d'exécution de l'invention.
La figure 4 représente le câblage de la chaîne de communication au niveau du tiroir du tableau électrique selon le mode d'exécution de l'invention.

### DESCRIPTION DETAILLEE DE MODES DE REALISATION PREFERES

Le concept de l'invention consiste à prévoir un dispositif de communication à haute fréquence de type Ethernet, formant un réseau de communication de type en guirlande, au sein d'un tableau électrique, et à prévoir une commutation automatique pour contourner un certain tiroir du tableau électrique lorsqu'il est débroché, pour maintenir opérationnelle la chaîne de communication pour le reste du tableau électrique. Dans certain cas, La guirlande peut être bouclée.

Une telle solution présente l'avantage de combiner la conviviabilité des opérations de maintenance, offerte par un tableau électrique, tout en garantissant un fonctionnement fiable et continu de la communication entre les dispositifs, même lorsqu'une opération de maintenance est en cours ou lorsqu'une opération normale d'un processus exige le débrochage volontaire d'une unité fonctionnelle.

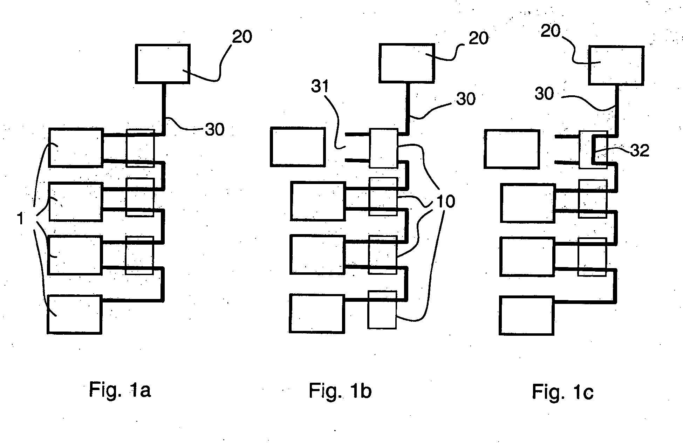

Les figures 1a à 1c illustrent schématiquement la mise en oeuvre de l'invention. Elles représentent un tableau électrique comprenant à titre d'exemple quatre tiroirs 1 comprenant chacun un dispositif électrique ou électronique, non représenté. En configuration de fonctionnement normal, représentée sur la figure 1a, tous les tiroirs sont embrochés, et les quatre dispositifs électriques ou électroniques du tableau électrique sont reliés par une chaîne de communication 30 en guirlande de type Ethernet, pilotée par un élément de contrôle 20 du tableau électrique.

Lors d'une opération de maintenance du dispositif électrique disposé dans le premier tiroir, ce dernier est ouvert, ce qui entraîne le débrochage et donc la déconnexion à la fois de son alimentation électrique de puissance, non représentée, et de sa liaison avec la chaîne de communication 30. La figure 1b représente la situation intermédiaire, juste après avoir ouvert le premier tiroir 1 : la chaîne de communication 30 est alors ouverte au niveau de sa liaison 31 avec le dispositif électrique du premier tiroir. Toutefois, selon l'invention, le tableau est équipé d'un dispositif de commutation 10 associé à chaque tiroir 1. Lors de la détection de la position débrochée du premier tiroir 1, le dispositif de commutation commute quasi simultanément pour former une dérivation 32 pour rétablir la chaîne de communication 30 et permettre aux autres dispositifs électriques du tableau de continuer de communiquer, selon la chaîne de communication commutée représentée en figure 1 c. La dérivation 32 peut être nommée aussi "by-pass ou contournement.

Avantageusement, cette commutation est très rapide, de durée inférieure à 10 ms, pour permettre de garantir la continuité de la chaîne de communication 30, éviter toute gêne sur les communications en cours, même à haut débit de l'ordre de 100 Mbits/s. A la fin de l'opération de maintenance, le tiroir 1 est refermé, embroché de nouveau, c'est-à-dire qu'il y a reconnexion automatique du dispositif électrique qu'il contient et sa réintégration automatique dans la chaîne de communication, selon le schéma de la figure 1a, après commutation inverse du dispositif de commutation 10.

La mise en oeuvre optimisée du concept de l'invention doit donc surmonter différents problèmes techniques, parmi lesquels :
- il faut obtenir une commutation rapide de la chaîne de communication, comme cela a été explicité ;
- la connexion débrochable du dispositif électrique doit être suffisamment robuste pour subir de nombreuses opérations d'actionnement du tiroir, par exemple au moins 500 opérations ;
- la solution doit être adaptée pour un fonctionnement indépendant de la manière dont un opérateur va manoeuvrer un tiroir, c'est-à-dire être adaptée à des vitesses, des efforts, etc., différents lors de l'actionnement du tiroir ;
- elle doit de plus permettre une production en grande série de tableaux électriques, et donc être fiable et reproductible.

Un mode d'exécution optimisé de l'invention va maintenant détaillé.

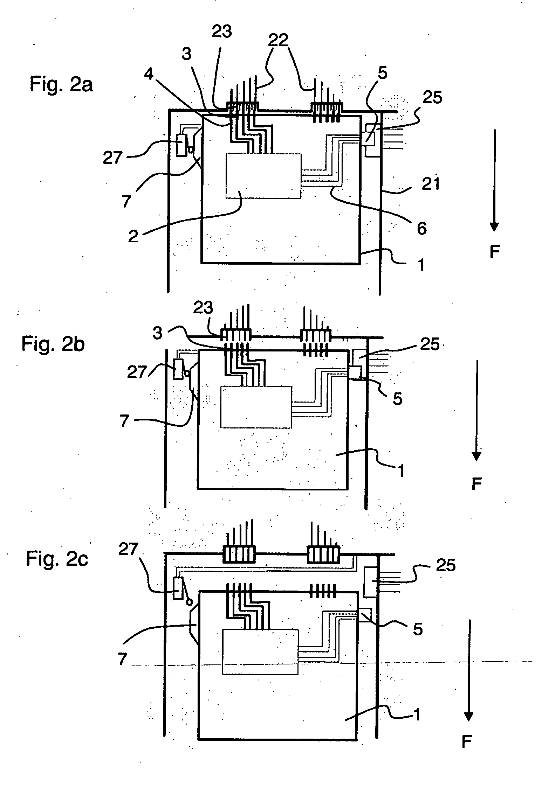

La figure 2a représente un tiroir 1 comprenant un dispositif électrique 2, dans une configuration fermée, embrochée, de fonctionnement normal. Ce tiroir 1 est susceptible de se déplacer en translation dans la direction illustrée par la flèche F par rapport au châssis fixe 21 du tableau électrique. Une ou plusieurs alimentation électrique de puissance 22 est aménagée au sein de ce châssis 21, et conduite jusqu'à une connexion débrochable réalisée par un premier connecteur 23 prévu en surface du châssis 21, coopérant avec un connecteur électrique 3 aménagé au fond du tiroir 1. Ces deux connecteurs de puissance 3, 23 se présentent sous la forme de connecteurs de type « tulipe » mâle/femelle. Naturellement, toute autre solution de connexion de puissance débrochable peut en variante être utilisée. Ensuite, la puissance est finalement amenée jusqu'au dispositif électrique 2 par un câble de puissance 4 partant du connecteur de puissance 3 du tiroir 1.

Selon le mode d'exécution préféré, le tiroir 1 peut occuper deux autres positions, représentées respectivement sur les figures 2b et 2c, dans lesquelles la connexion de puissance 3, 23 est rompue. La seconde position, dite « position test », est représentée sur la figure 2b ; le tiroir 1 a été légèrement ouvert dans la direction F par rapport au châssis 21 du tableau électrique. Dans cette position test, la liaison de communication du dispositif électrique 2 reste assurée. Dans la troisième position, dite « position débrochée », illustrée sur la figure 2c, les connexions de puissance comme les connexions de communication sont débrochées, c'est-à-dire ouvertes.

Pour la mise en oeuvre de ce fonctionnement, le tiroir 1 est équipé d'un connecteur de communication 5 de type glissant, qui coopère avec un connecteur correspondant 25 fixé sur le châssis 21 du tableau électrique, au niveau d'une face latérale du tiroir 1. Ensuite, une liaison de communication 6 est prévue depuis le connecteur de communication 5 du tiroir 1 jusqu'au dispositif électrique 2. En remarque, une connexion glissante similaire peut aussi être mise en place pour une connexion de puissance du tiroir.

D'autre part, un interrupteur de type micro-interrupteur 27 (nommé "microswitch" en langage technique) est aménagé sur le châssis 21 du tableau électrique, par exemple vissé dans le tableau, au niveau de l'autre partie latérale du tiroir 1. Ce dernier est équipé d'un moyen de coopération 7 avec le micro-interrupteur 27, sous la forme d'une protubérance qui dépasse de la surface latérale du tiroir 1 pour venir actionner le micro-interrupteur en position fermée, de travail, aussi appelée « position ON », dans les deux positions de fonctionnement normal et de test respectivement représentées sur les figures 2a et 2b. Ce moyen de coopération 7 peut être une pièce métallique en forme de trapèze solidaire du tiroir. Le positionnement et la forme de ce moyen de coopération 7 sont tels qu'ils cessent d'actionner le micro-interrupteur 27, qui passe alors automatiquement en position ouverte de repos, aussi appelée « position OFF », dès que la liaison glissante de communication 5, 25 est rompue. L'utilisation d'un micro-interrupteur pour cet interrupteur du tableau électrique présente les avantages d'une commutation très rapide, de ne nécessiter qu'un faible encombrement et d'être compatible avec un grand nombre d'utilisation.

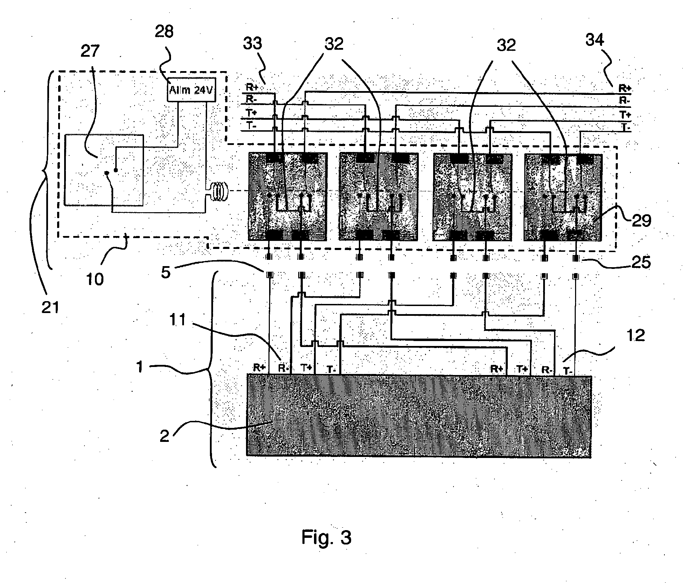

La figure 3 représente plus en détail l'architecture de la chaîne de communication 30 associée à un tiroir 1. Elle comprend en fait quatre fils de communication, un premier pour une transmission positive de données appelé T+, un second pour une transmission négative de données appelé T- , un troisième pour une réception positive de données appelé R+, et un quatrième pour une réception négative de données appelé R-. Les deux fils de transmission T+, T- et les deux fils de réception R+, R- forment respectivement deux brins distincts de communication.

Un dispositif électrique 2 disposé dans le tiroir 1 comprend un connecteur de type Ethernet pour sa liaison à la chaîne de communication. Cette connexion utilise en fait deux connecteurs 11, 12 de type RJ45, formant respectivement les entrée et sortie de la chaîne de communication 30. Ces connecteurs peuvent être connectés à un disjoncteur électrique. La chaîne de communication 30 comprend ainsi une entrée 33 provenant d'une partie amont du tableau électrique et une sortie 34 vers une partie aval du tableau électrique. Chacun des huit fils T+, T-, R+, R- nécessaires à la liaison du dispositif électrique 2 dans la chaîne de communication 30 est lié selon une connexion glissante 5, 25 au niveau de l'interface entre le châssis 21 et le tiroir 1, comme cela a été décrit précédemment.

De plus, un dispositif de commutation 10 est prévu au sein du tableau électrique, permettant d'agir sur les huit fils de la chaîne de communication 30. Ce dispositif de commutation 10 comprend d'abord le micro-interrupteur 27 mentionné précédemment, une alimentation électrique 28 dédiée, puis une liaison vers des relais 29 électromécaniques ou électroniques dont les contacts sont utilisés pour commuter les fils de la chaîne de communication, sous la commande du micro-interrupteur 27.

A titre d'exemple, la figure 3 illustre le micro-interrupteur en position ouverte ou OFF, qui induit le positionnement des relais de sorte de former des liaisons de dérivation 32 pour chacun des quatre fils de la chaîne de communication 30, ce qui correspond bien à une position débrochée du tiroir 1, dans laquelle les connecteurs glissants 5, 25 de respectivement le tiroir 1 et le châssis 21 du tableau électrique sont séparés. Ce mécanisme permet d'atteindre un temps de commutation très rapide, compatible avec les hautes fréquences mises en oeuvre dans les communications de type Ethernet.

D'autre part, les contacts glissants 5, 25 utilisés au niveau de l'interface tiroir/châssis sont tels qu'ils permettent une connexion en aveugle lors de l'embrochage du tiroir 1, c'est-à-dire son positionnement au fond de son emplacement, en configuration de fonctionnement normal en restant compatible avec les jeux existants du fait de la mobilité du tiroir 1, et en offrant une résistance mécanique suffisante vis-à-vis de la masse du tiroir et des efforts mis en jeu lors de sa manoeuvre, pour supporter un grand nombre de ces manoeuvres, et réagir de manière fiable quelque soit la vitesse et la manière dont un certain opérateur va manoeuvrer le tiroir. Ces contacts glissants se présentent sous la forme de lames contact métalliques.

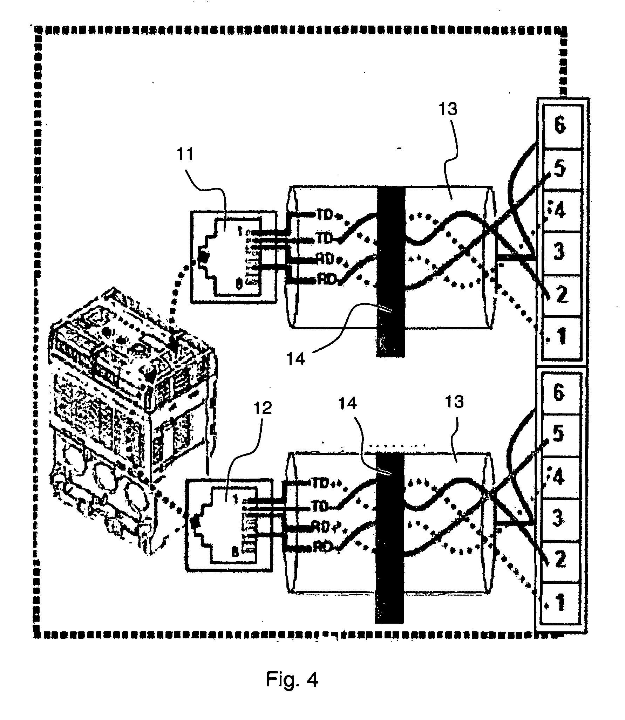

Enfin, pour réduire les phénomènes de diaphonie qui pourraient survenir au niveau de la connexion glissante 5, 25 aux fréquences élevées de transmission de données, le câblage des fils de la chaîne de communication comprend un brin de masse inséré entre deux brins de communication T+, T- et R+, R-. La figure 4 représente cette mise en oeuvre. Chaque liaison de communication au sein du tiroir 1 est réalisée à l'aide de câbles blindés 13, reliés à la masse du tableau électrique par un collier de fixation 14 métallique. Ensuite, ces câbles blindés 13 sont reliés au reste de la chaîne de communication par six contacts glissants dont deux signaux de masse formant un brin de masse, intercalé entre les deux brins de communication, au niveau du connecteur de communication 5. Ainsi, les six fils issus du câble blindé 13 formant la liaison de communication 6 au sein du tiroir 1 sont disposés dans l'ordre suivant au niveau du connecteur glissant 5 : un premier fil pour la transmission positive de données T+, un second fil pour la transmission négative de données appelé T-, un troisième fil de masse, un quatrième fil pour la réception négative de données appelé R-, un cinquième fil pour une réception positive de données appelé R+, et un sixième fil de masse.

L'invention a été décrite sur la base d'un tableau électrique particulier à titre non limitatif. Le concept reste applicable pour tout autre moyen de communication, même s'il est particulièrement adapté à tout moyen de communication à fort débit de type Ethernet ou autre. De plus, il peut s'implémenter dans tout tableau électrique, quelle que soit son architecture, son nombre de tiroirs, etc. En remarque, les tiroirs pourraient être prévus pour occuper uniquement deux positions, voire plus de trois positions.

## Revendications

1. Dispositif de communication à haute fréquence de type Ethernet pour un tableau électrique, **caractérisé en ce qu'**il comprend au moins un interrupteur commandant un dispositif de commutation (10) pour dériver une chaîne de communication (30) haut débit, l'interrupteur étant apte à coopérer avec un tiroir (1) débrochable d'un tableau électrique pour commander le dispositif de commutation (10) en fonction de la position du tiroir (1) ledit dispositif de commutation commutant pour former une dérivation (32) pour rétablir la chaîne de communication (30) et permettre aux autres dispositifs électriques du tableau de continuer de communiquer lorsque la détection de la position débrochée dudit tiroir (1) est détectée, ou le tiroir peut occuper une première position embrochée dans laquelle il est relié à la chaine de communication.

2. Dispositif de communication pour un tableau électrique selon la revendication précédente, **caractérisé en ce que** l'interrupteur est un micro-interrupteur (27).

3. Dispositif de communication pour un tableau électrique selon la revendication 1 ou 2, **caractérisé en ce que** l'interrupteur commande au moins un relais (29) électromécanique ou électronique dont les contacts permettent de commuter les fils T+, T-, R+, R- de la chaîne de communication (30).

4. Dispositif de communication pour un tableau électrique selon l'une des revendications précédentes, **caractérisé en ce que** la chaîne de communication (30) transmet des données à un débit allant jusqu'à 100 Mbits/s.

5. Dispositif de communication pour un tableau électrique selon l'une des revendications précédentes, **caractérisé en ce qu'**il comprend des contacts glissants (5, 25) au niveau des fils de la chaîne de communication (30) pour permettre de maintenir le contact avec la chaîne de communication (30) dans une position intermédiaire de test d'un tiroir (1) du tableau électrique.

6. Dispositif de communication pour un tableau électrique selon la revendication précédente, **caractérisé en ce qu'**il comprend au moins un brin de masse disposé entre deux brins de communication T+, T- ; R+, R de la chaîne de communication au niveau des contacts glissants (5, 25) pour réduire la diaphonie aux fréquences élevées de transmission de données.

7. Tableau électrique comprenant au moins un tiroir (1) débrochable formant un logement pour le positionnement d'un dispositif électrique, **caractérisé en ce qu'**il comprend un dispositif de communication à haute fréquence de type Ethernet selon l'une des revendications précédentes formant une chaîne de communication (30) en guirlande, **en ce que** le au moins un tiroir (1) comprend un connecteur (5) débrochable pour le relier ou non à la chaîne de communication (30), **en ce que** le au moins un tiroir (1) peut occuper une première position embrochée dans laquelle il est relié à la chaîne de communication (30), et **en ce qu'**il comprend un interrupteur solidaire du tableau électrique commandant un commutateur de dérivation de sorte de former une dérivation (32) sur la chaîne de communication (30) lorsque le tiroir (1) occupe une seconde position débrochée.

8. Tableau électrique selon la revendication précédente, **caractérisé en ce que** l'interrupteur est disposé sur le châssis (21) en vis-à-vis avec une face latérale du tiroir (1), et **en ce que** ce dernier comprend un élément de coopération (7) coopérant avec l'interrupteur.

9. Tableau électrique selon la revendication précédente, **caractérisé en ce que** l'interrupteur est en position fermée lorsque le tiroir (1) occupe une première position de fonctionnement normal dans laquelle son élément de coopération (7) coopère avec l'interrupteur et **en ce que** l'interrupteur est en position ouverte lorsque le tiroir occupe une seconde position ouverte dans laquelle son élément de coopération (7) ne coopère plus avec l'interrupteur.

10. Tableau électrique selon l'une des revendications 7 à 9, **caractérisé en ce qu'**il comprend une liaison glissante (5, 25) au niveau d'une face latérale du tiroir (1) débrochable, par laquelle transite la chaîne de communication (30), de sorte de lier le tiroir (1) à la chaîne de communication (30) dans la première position de fonctionnement normal du tiroir et dans une seconde position intermédiaire de test dans laquelle le tiroir est légèrement ouvert, et de déconnecter le tiroir (1) de la chaîne de communication (30) dans une position débrochée du tiroir (1), l'interrupteur étant disposé relativement au tiroir (1) de sorte de commander la dérivation de la chaîne de communication (30) quasi simultanément à la déconnexion de la liaison glissante (5, 25), dans un délai inférieur ou égal à 10 ms.

11. Tableau électrique selon l'une des revendications 7 à 10, **caractérisé en ce qu'**il comprend une connexion de puissance (3, 23) débrochable disposée au niveau du fond du tiroir.

12. Tiroir d'un tableau électrique selon l'une des revendications 7 à 11, **caractérisé en ce qu'**il comprend un connecteur de communication (5) débrochable pour une liaison avec une chaîne de communication (30) à haute fréquence de type Ethernet et un élément de coopération (7) apte à une coopération avec un interrupteur de commande d'un dispositif de commutation (10) de la chaîne de communication (30).

## Patentansprüche

1. Kommunikationseinrichtung mit hoher Übertragungsrate vom Typ Ethernet für eine elektrische Schaltanlage, **dadurch gekennzeichnet, dass** die Einrichtung mindestens einen Schaltkontakt umfasst, der eine Umschalteinrichtung (10) zur Verzweigung einer Kommunikationskette mit hoher Übertragungsrate (30) ansteuert, welcher Schaltkontakt dazu dient, mit einem ausfahrbaren Einschub (1) einer elektrischen Schaltanlage zusammenzuwirken, um die Umschalteinrichtung (10) in Abhängigkeit von der Stellung des Einschubs (1) anzusteuern, wobei die genannte Umschalteinrichtung bei Erfassung der Trennstellung des genannten Einschubs (1) eine Verzweigung (32) herstellt, um die Kommunikationskette (30) wiederherzustellen und die Kommunikationsfähigkeit der übrigen elektrischen Geräte der Schaltanlage aufrechtzuerhalten, und der Einschub (1) eine erste Betriebsstellung einnehmen kann, in der er mit der Kommunikationskette verbunden ist.

2. Kommunikationseinrichtung für eine elektrische Schaltanlage nach dem vorhergehenden Anspruch, **dadurch gekennzeichnet, dass** der Schaltkontakt als Mikroschalter (27) ausgebildet ist.

3. Kommunikationseinrichtung für eine elektrische Schaltanlage nach Anspruch 1 oder 2, **dadurch gekennzeichnet, dass** der Schaltkontakt mindestens ein elektromechanisches oder elektronisches Relais (29) ansteuert, dessen Kontakte die Umschaltung der Leitungen T+, T-, R+, R- der Kommunikationskette (30) erlauben.

4. Kommunikationseinrichtung für eine elektrische Schaltanlage nach einem der vorhergehenden Ansprüche, **dadurch gekennzeichnet, dass** die Kommunikationskette (30) Daten mit einer Übertragungsrate von bis zu 100 Mbits/s überträgt.

5. Kommunikationseinrichtung für eine elektrische Schaltanlage nach einem der vorhergehenden Ansprüche, **dadurch gekennzeichnet, dass** die Leitungen der Kommunikationskette (30) über Gleitkontakte (5, 25) geführt werden, um in einer Test-Zwischenstellung eines Einschubs (1) der elektrischen Schaltanlage die Kontaktverbindung mit der Kommunikationskette (30) aufrechtzuerhalten.

6. Kommunikationseinrichtung für eine elektrische Schaltanlage nach dem vorhergehenden Anspruch, **dadurch gekennzeichnet, dass** sie mindestens eine Masseleitung umfasst, die im Bereich der Gleitkontakte (5, 25) zwischen jeweils zwei Datenleitungen T+, T- ; R+, R- der Kommunikationskette angeordnet ist, um ein Übersprechen bei hohen Datenübertragungsraten zu reduzieren.

7. Elektrische Schaltanlage mit mindestens einem ausfahrbaren Einschub (1) zur Aufnahme einer elektrischen Einrichtung, **dadurch gekennzeichnet, dass** die Schaltanlage eine Kommunikationseinrichtung mit hoher Übertragungsrate vom Typ Ethernet nach einem der vorhergehenden Ansprüche umfasst, die als Durchschleifungs-Kommunikationskette (30) ausgebildet ist, dadurch, dass der mindestens einfach vorhandene Einschub (1) einen trennbaren Steckverbinder (5) umfasst, um den Einschub mit der Kommunikationskette (30) zu verbinden oder von dieser zu trennen, dadurch, dass der mindestens einfach vorhandene Einschub (1) eine erste Betriebsstellung einnehmen kann, in der er mit der Kommunikationskette (30) verbunden ist, sowie dadurch, dass an der Schaltanlage ein Schaltkontakt angebracht ist, der eine Verzweigungs-Umschalteinrichtung ansteuert, um eine Verzweigung (32) in der Kommunikationskette (30) herzustellen, wenn der Einschub (1) eine zweite Trennstellung einnimmt.

8. Elektrische Schaltanlage nach dem vorhergehenden Anspruch, **dadurch gekennzeichnet, dass** der Schaltkontakt am Einschubrahmen (21), gegenüber einer Seitenwand des Einschubs (1) angebracht ist, und dass der Einschub ein Steuerelement (7) umfasst, das dazu dient, mit dem Schaltkontakt zusammenzuwirken.

9. Elektrische Schaltanlage nach dem vorhergehenden Anspruch, **dadurch gekennzeichnet, dass** der Schaltkontakt geschlossen ist, wenn der Einschub (1) in einer ersten, normalen Betriebsstellung steht, in der das Steuerelement (7) mit dem Schaltkontakt zusammenwirkt, und dadurch, dass der Schaltkontakt geöffnet ist, wenn der Einschub (1) in einer zweiten Stellung entsprechend einer Trennstellung steht, in der das Steuerelement (7) nicht mehr mit dem Schaltkontakt zusammenwirkt.

10. Elektrische Schaltanlage nach einem der Ansprüche 7 bis 9, **dadurch gekennzeichnet, dass** an einer Seitenwand des ausfahrbaren Einschubs (1) eine Gleitverbindung (5, 25) angeordnet ist, durch die die Kommunikationskette (30) hindurchgeführt wird, derart, dass der Einschub (1) in der ersten, normalen Betriebsstellung des Einschubs sowie in einer zweiten Test-Zwischenstellung, in welcher der Einschub geringfügig ausgefahren ist, mit der Kommunikationskette (30) verbunden ist, und der Einschub (1) in einer Trennstellung des Einschubs (1) von der Kommunikationskette (30) getrennt ist, wobei der Schaltkontakt relativ zum Einschub so angeordnet ist, dass bei Trennung der Gleitverbindung (5, 25) die Verzweigung der Kommunikationskette (30) praktisch unverzögert, d.h. in einer Zeit von kleiner oder gleich 10 ms hergestellt wird.

11. Elektrische Schaltanlage nach einem der Ansprüche 7 bis 10, **dadurch gekennzeichnet, dass** sie eine trennbare Verbindung (3, 23) der Leistungskreise an der Rückwand des Einschubs umfasst.

12. Einschub einer elektrischen Schaltanlage nach einem der Ansprüche 7 bis 11, **dadurch gekennzeichnet, dass** er einen trennbaren Kommunikations-Steckverbinder zum Anschluss an eine Kommunikationskette mit hoher Übertragungsrate (30) vom Typ Ethernet sowie ein Steuerelement (7) umfasst, das dazu dient, mit einem Schaltkontakt zur Ansteuerung einer Umschalteinrichtung (10) der Kommunikationskette (30) zusammenzuwirken.

## Claims

1. Ethernet-type high-frequency communication device for an electrical panel, **characterized in that** it comprises at least one switch that controls a switching device (10) in order to bypass a high-speed communication subsystem (30), the switch being capable of cooperating with an unpluggable drawer unit (1) of an electrical panel in order to control the switching device (10) on the basis of the position of the drawer unit (1), said switching device switching in order to form a bypass (32) in order to restore the communication subsystem (30) and allow the other electrical devices of the panel to continue to communicate when the unplugged position of said drawer unit (1) is detected, or the drawer unit can occupy a first plugged-in position in which it is connected to the communication subsystem.

2. Communication device for an electrical panel according to the preceding claim, **characterized in that** the switch is a microswitch (27).

3. Communication device for an electrical panel according to Claim 1 or 2, **characterized in that** the switch controls at least one electromechanical or electronic relay (29), the contacts of which allow the wires T+, T-, R+, R- of the communication subsystem (30) to be switched.

4. Communication device for an electrical panel according to one of the preceding claims, **characterized in that** the communication subsystem (30) transmits data at a rate ranging up to 100 Mbits/s.

5. Communication device for an electrical panel according to one of the preceding claims, **characterized in that** it comprises sliding contacts (5, 25) at the level of the wires of the communication subsystem (30) in order to allow contact to be maintained with the communication subsystem (30) in an intermediate test position of a drawer unit (1) of the electrical panel.

6. Communication device for an electrical panel according to the preceding claim, **characterized in that** it comprises at least one earth strand disposed between two communication strands T+, T- ; R+, R- of the communication subsystem at the level of the sliding contacts (5, 25) in order to reduce crosstalk at high data transmission frequencies.

7. Electrical panel comprising at least one unpluggable drawer unit (1) that forms a housing for positioning an electrical device, **characterized in that** it comprises an Ethernet-type high-frequency communication device according to one of the preceding claims that forms a daisy-chain communication subsystem (30), **in that** the at least one drawer unit (1) comprises an unpluggable connector (5) in order to connect it or not to connect it to the communication subsystem (30), **in that** the at least one drawer unit (1) can occupy a first, plugged-in position in which it is connected to the communication subsystem (30), and **in that** it comprises a switch that is integral with the electrical panel and that controls a bypass switch so as to form a bypass (32) on the communication subsystem (30) when the drawer unit (1) occupies a second, unplugged position.

8. Electrical panel according to the preceding claim, **characterized in that** the switch is disposed on the chassis (21) opposite a lateral face of the drawer unit (1), and **in that** the latter comprises a cooperating element (7) that cooperates with the switch.

9. Electrical panel according to the preceding claim, **characterized in that** the switch is in a closed position when the drawer unit (1) occupies a first, normal operation position in which its cooperating element (7) cooperates with the switch and **in that** the switch is in an open position when the drawer unit occupies a second, open position in which its cooperating element (7) no longer cooperates with the switch.

10. Electrical panel according to one of Claims 7 to 9, **characterized in that** it comprises a sliding link (5, 25) at the level of a lateral face of the unpluggable drawer unit (1), through which the communication subsystem (30) passes, so as to link the drawer unit (1) to the communication subsystem (30) in the first, normal operation position of the drawer unit and in a second, intermediate test position in which the drawer unit is slightly open, and to disconnect the drawer unit (1) from the communication subsystem (30) in an unplugged position of the drawer unit (1), the switch being disposed relative to the drawer unit (1) so as to control the bypass of the communication subsystem (30) more or less at the same time as the sliding link (5, 25) is disconnected, within a period of less than or equal to 10 ms.

11. Electrical panel according to one of Claims 7 to 10, **characterized in that** it comprises an unpluggable power connection (3, 23) disposed at the back of the drawer unit.

12. Drawer unit of an electrical panel according to one of Claims 7 to 11, **characterized in that** it comprises an unpluggable communication connector (5) for an Ethernet-type high-frequency communication subsystem (30) and a cooperating element (7) capable of cooperating with a control switch for a switching device (10) of the communication subsystem (30).
